**Europäisches Patentamt**

**European Patent Office**

**Office européen des brevets**

(11) Veröffentlichungsnummer : **0 211 224 B1**

(12) **EUROPÄISCHE PATENTSCHRIFT**

(45) Veröffentlichungstag der Patentschrift :
30.08.89

(51) Int. Cl.⁴ : **B 01 D 53/36, B 01 J 29/02, B 01 J 21/16**

(21) Anmeldenummer : 86108831.8

(22) Anmeldetag : 28.06.86

(54) Verwendung eines Katalysators zur Verminderung des Stickoxidgehalts von Verbrennungsabgasen.

(30) Priorität : 05.07.85 DE 3524160

(43) Veröffentlichungstag der Anmeldung :
25.02.87 Patentblatt 87/09

(45) Bekanntmachung des Hinweises auf die Patenterteilung : 30.08.89 Patentblatt 89/35

(84) Benannte Vertragsstaaten :
AT BE CH DE FR GB IT LI NL SE

(56) Entgegenhaltungen :
GB-A- 2 162 830
US-A- 3 962 135
FIFTH WORLD PETROLEUM CONGRESS, 1959, Section III, paper 9; W. FRANZ et al.: "Catalysts on the
basis of acid-activated montmorillonites"

(73) Patentinhaber : SÜD-CHEMIE AG
Lenbachplatz 6
D-8000 München 2 (DE)

(72) Erfinder : Schneider, Michael, Dr.
Waldparkstrasse 54a
D-8012 Ottobrunn-Riemerling (DE)
Erfinder : Kochloefl, Karl, Dr.
Kreuzstrasse 2
D-8052 Moosburg (DE)
Erfinder : Maletz, Gerd, Dr.
Innere Regensburger Strasse 9a
D-8300 Landshut (DE)
Erfinder : Wernicke, Hans Jürgen, Dr.
Böhmerwaldstrasse 37g
D-8192 Geretsried (DE)

(74) Vertreter : Reitzner, Bruno, Dr. et al
Patentanwälte Dipl.-Ing. R. Splanemann Dr. B.
Reitzner Tal 13
D-8000 München 2 (DE)

## Beschreibung

Die Erfindung betrifft die Verwendung eines Katalysators zur Verminderung des Stickoxidgehalts von Abgasen, insbesondere von Verbrennungsabgasen.

Bekanntlich entstehen bei der Verbrennung fossilen Materials, wie Erdöl, Erdgas oder Kohle, sowohl aus N-haltigen Komponenten als auch aus dem Luftstickstoff Stickoxide ($NO_x$), welche in die Atmosphäre gelangen und eine ernste Umweltbeeinträchtigung darstellen. Die Stickoxide werden als mitverantwortlich für die Waldschädigung durch « sauren Regen » sowie für die Bildung des « photochemischen Smogs » betrachtet, so daß ein großes Interesse besteht, den $NO_x$-Gehalt von Verbrennungsgasen zu reduzieren. Unter Verbrennungsabgasen sind sowohl solche aus Feuerungsanlagen als auch solche aus Verbrennungsmotoren zu verstehen.

Es ist seit langem bekannt, daß Stickoxide durch $NH_3$ selektiv, d. h. in Gegenwart eines hohen Sauerstoffüberschusses, in $N_2$ und $H_2O$ überführt werden können. Weiterhin sind bereits verschiedene Katalysatoren für diese Reaktion bekannt.

Bei den bekannten $NO_x$-Reduktionskatalysatoren handelt es sich vorwiegend um schwermetallhaltige Systeme. Die DE-PS 24 58 888 beschreibt z. B. die Kombination von $TiO_2$ mit Oxiden der Metalle Vanadin, Molybdän, Wolfram, Nickel, Kobalt, Uran etc. Da die Wirksamkeit von Entstickungskatalysatoren unter den für diese Anwendung typischen Betriebsbedingungen mit zunehmender Gebrauchsdauer stetig abnimmt, müssen diese relativ häufig ersetzt werden. Die unbrauchbar gewordenen Katalysatoren, welche große Mengen an giftigen Schwermetallverbindungen enthalten, müssen nun in aufwendiger Weise regeneriert oder aber unter Beachtung strenger Vorschriften deponiert werden. In Anbetracht der für die $NO_x$-Entfernung aus Rauchgasen erforderlichen großen Katalysatormengen ist die Gefahr einer sekundären Umweltbelastung offensichtlich.

Weiterhin ist die Verwendung von Molekularsieben zur Katalyse der $NO_x$-Reduktion mittels $NH_3$ bekannt. So wird beispielsweise nach DE-OS 3 000 383 als Katalysator ein Clinoptilolith in der Wasserstofform verwendet, der durch Ionenaustausch eines natürlich vorkommenden Clinoptiloliths mit einer Ammoniumnitratlösung und anschließendem Waschen mit einer starken Säure erhalten worden ist.

Ferner ist in der DE-OS 33 28 653 ein Katalysator beschrieben, der aus einem keramischen Molekularsieb besteht, dessen Durchlaß-Querschnittsdurchmesser in einer Größenordnung unterhalb des kritischen Moleküldurchmessers von Ammoniak bis oberhalb des kritischen Moleküldurchmessers von Stickstoff liegen.

Die katalytische Aktivität dieser Molekularsiebkatalysatoren ist also durch bestimmte Porenstrukturen bedingt. Bei diesen Katalysatoren besteht die Gefahr, daß bei hohen Reaktionstemperaturen unter der Einwirkung des in Verbrennungsabgasen in hoher Konzentration enthaltenen Wasserdampfes die Kristallstruktur beeinträchtigt wird, während bei tiefen Temperaturen die bereitwillige Absorbtion des Wasserdampfes zur Verminderung der Aktivität führt. Als schwerwiegenden Nachteil erscheint vorallem, daß bei Verwendung von Molekularsieben, wie H-Mordenit und H-Clinoptilolith, der Schadstoff $N_2O$ in beträchtlicher Konzentration gebildet wird, wie z. B. aus der Arbeit von J. R. Kiovsky, P. B. Koradla und C. T. Lin. in Ind. Eng. Chem. Prod. Res. Dev. 19 (1980) 218, bekannt ist.

Aus der Literaturstelle « Fifth World Petroleum Congress », 1959, Section III, paper 9, Seiten 1-7, sind Katalysatoren auf der Basis von säureaktivierten Montmorilloniten bekannt, die für säurekatalysierte Reaktionen, insbesondere als Crack-Katalysatoren, verwendet werden. Sie sind auch geeignet, als Phenolalkylierungskatalysatoren sowie als Katalysatoren für die Dehydratisierung von Cyclohexanol, für die Veresterung von Carbonsäuren und für Isomerisierungs- und Polymerisationsreaktionen. Die Aktivität der Katalysatoren für die säurekatalysierten Reaktionen wird in erster Linie auf deren Kationenaustauschvermögen zurückgeführt.

Bei den vorliegenden Reaktionen handelt es sich jedoch nicht um säurekatalysierte Reaktionen, sondern um Redox-Reaktionen, wobei die Stickoxide reduziert und das verwendete Reduktionsmittel oxidiert wird. Der bevorzugt verwendete Ammoniak wird hierbei zu Stickstoff oxidiert.

Es ist nicht erkennbar, daß die beschriebenen katalysatoren für Reaktionen des hier in Frage kommenden Typs geeignet sein könnten.

Die US-A-3 962 135 betrifft die Herstellung von porösen kieselsäurehaltigen Pellets mit bestimmter Porenradiusverteilung aus säureaktivierten Tonen. Die Pellets werden selbst nicht als Katalysatoren, sondern nur als Träger verwendet, die mit katalytisch wirksamen Metallen oder Metallverbindungen belegt werden. Die Säurebehandlung hat den Zweck, die Porengröße zu erhöhen, damit bei Reaktionen, bei denen die Gefahr einer Koksabscheidung besteht, eine Verstopfung der Poren verhindert wird.

Diese Verhältnisse liegen bei den erfindungsgemäßen Reaktionen nicht vor. Es werden kleine Moleküle umgesetzt, aus denen keine hochmolekularen Abscheidungen gebildet werden können.

Die GB-A-2 162 830 betrifft ein Verfahren zur Verminderung des Stickoxidgehalts von Verbrennungsabgasen durch Reduktion von Ammoniak, wobei als Katalysatoren Zeolithe verwendet werden, deren Kationen durch H und/oder Fe ausgetauscht sind. Bei diesen Katalysatoren handelt es sich um Gerüstsilikate, wobei die Wirkung in der besonderen Struktur der zeolithischen Gerüstsilikate gesehen wird. Der Austausch der Kationen durch Wasserstoff beschränkt sich auf den Austausch der ein- oder zweiwertigen Kationen auf den Zwischengitterplätzen durch Wasserstoffionen.

Bei den Molekularsieb-Katalysatoren auf Zeolithbasis findet die katalytische Reduktion von Stickoxid mit Ammoniak nicht nur an der Oberfläche, sondern im gesamten Volumen, d. h. in Porenkanälen des Katalysators statt.

Der Erfindung liegt die Aufgabe zugrunde, einen Katalysator zur Verminderung des Stickoxidgehalts von Abgasen, insbesondere von Verbrennungsabgasen, bereitzustellen, der frei von toxischen Schwermetallverbindungen ist, so daß eine sekundäre Umweltschädigung ausgeschlossen ist, der bei der Reaktion von Stickoxiden mit wasserstoffhaltigen Reduktionsmitteln, wie NH$_3$, ausschließlich die Bildung von N$_2$ und H$_2$O fördert, der darüberhinaus aus in großen Mengen verfügbarem Rohmaterial natürlicher Herkunft in einfacher Weise hergestellt werden kann und der gegenüber Schwefeloxiden (SO$_x$) beständig ist.

Diese Aufgabe wird überraschenderweise durch die Verwendung eines Katalysators gelöst, der als wirksame Komponente ein säureaktiviertes Silikat mit Schichtstruktur enthält, dessen Schichtstruktur im wesentlichen noch erhalten ist.

Vorzugsweise ist die wirksame Komponente ein säureaktiviertes Silikat mit Dreischichtstruktur (Dreischichtsilikat) mit folgenden Merkmalen

a) das Dreischichtsilikat hat vor der Säureaktivierung ein Kationenaustauschvermögen von ≥ 30 mVal/100 g ;

b) aufgrund der Säureaktivierung ist die Konzentration der Zwischenschicht-Kationen erniedrigt, und die BET-Oberfläche ist um mindestens 15 %, vorzugsweise um mindestens 50 %, bezogen auf die BET-Oberfläche des Dreischichtsilikats vor der Säureaktivierung, erhöht.

Bei diesen Katalysatoren findet im Gegensatz zu den Molekularsiebkatalysatoren eine Reaktion nicht in der dreidimensionalen Porenstruktur, sondern wahrscheinlich an den Ebenen der zweidimensionalen Silikat-Schichtstruktur statt.

Unter einer « Säureaktivierung » des Schichtsilikats versteht man erfindungsgemäß eine Behandlung, die über den Austausch der ein- oder zweiwertigen Kationen auf den Zwischengitterplätzen durch Wasserstoffionen hinausgeht. Es wurde nämlich festgestellt, daß bei Verwendung von Schichtsilikaten, bei denen nur ein derartiger Ionenaustausch stattgefunden hat, keine Katalysatoren mit ausreichend hoher Aktivität erhalten werden können. Ferner ergeben Katalysatoren, die unter Verwendung von natürlichen Schichtsilikaten in der H-Form erhalten wurden, keine ausreichend hohen Aktivitäten. Sie sind ferner gegenüber SO$_x$ nicht stabil.

Die Säureaktivierung führt zu einer Erhöhung der spezifischen Oberfläche, die im allgemeinen nach der BET-Methode bestimmt wird. Andererseits darf die Säureaktivierung jedoch nicht so weit geführt werden, daß nur noch der Anteil an amorpher Kieselsäure überwiegt, da in diesem Fall eine deutliche Abnahme der katalytischen Aktivität resultiert.

Die Verwendung eines Dreischichtsilikats, das vor der Säureaktivierung ein Kationenaustauschvermögen von ≥ 30 mVal/100 g aufweist, ist besonders vorteilhaft. Der Grund, warum mit derartigen Ausgangsmaterialien besonders aktive Katalysatoren erhalten werden, ist zwar im einzelnen noch nicht geklärt, kann jedoch auf die besonders günstige kristalline Struktur der säureaktivierten Dreischichtsilikate zurückgeführt werden.

Die spezifische Oberfläche der erfindungsgemäß verwendeten säureaktivierten Schichtsilikate liegt vorzugsweise zwischen etwa 80 und 400 m$^2$/g.

Bei den erfindungsgemäß verwendeten Katalysatoren ist die Konzentration der Zwischenschicht-Kationen (insbesondere Na, K, Mg, Ca) aufgrund der Säureaktivierung gegenüber der Konzentration der Zwischenschicht-Kationen im Schichtsilikat vor der Säureaktivierung vorzugsweise um mindestens 12 % erniedrigt.

Bei der Säureaktivierung werden zunächst die Kationen aus den Zwischengitterplätzen entfernt. Bei der weiteren Säureaktivierung werden auch Kationen aus Gitterplätzen, insbesondere Aluminium und Eisen, entfernt. Damit einher geht eine Änderung der Silikatstruktur. Die Silikatschichten werden von den Rändern her von der Säure angegriffen. Es entstehen wahrscheinlich SiO$_4$-Tetraederbänder, die durch eine gewisse Keilwirkung eine Desorientierung des Schichtsilikats verursachen.

Der Säureaufschluß wird in allgemeinen so weit durchgeführt, bis der SiO$_2$-Gehalt des säureaktivierten Schichtsilikats, bezogen auf den des Ausgangsmaterials, um mindestens 5 % vorzugsweise um mindestens 10 % erhöht ist. In Abhängigkeit vom Ausgangsmaterial beträgt der SiO$_2$-Gehalt dann 50 bis 90 Gew.-%. Der Säureaufschluß wird hierbei nicht so weit geführt, daß nur noch röntgenamorphes SiO$_2$ hinterbleibt. Vielmehr wird der Säureaufschluß dann unterbrochen, wenn ein bestimmter Kristallinitätsgrad des säureaktivierten Schichtsilikats bzw. ein Anteil von nicht mehr als 45 % an extrahierbarer Kieselsäure vorliegt. Der Anteil an extrahierbarer Kieselsäure wird dadurch bestimmt, daß man den nach Durchführung des Säureaufschlusses erhaltenen, gewaschenen und getrockneten Filterkuchen mit Sodalösung behandelt, wie von Y. Otsubo, Jap. J. Chem. 72 (1951) 573, beschrieben.

Die Schichtsilikate, die dem Smektit-Typ angehören, werden besonders bevorzugt verwendet. Daneben können auch Alumosilikate vom Kaolinit-Typ verwendet werden.

Vorzugsweise beträgt der Volumenanteil der Makroporen mit einem Porendurchmesser von 80 nm mindestens 25 %. Das Porenvolumen wird nach der Methode der Quecksilberporosimetrie bestimmt.

Die Säurebehandlung zur Überführung des Ausgangsmaterials in den erfindungsgemäß verwendeten Katalysator kann in an sich bekannter Weise durchgeführt werden, wobei vorzugsweise wäßrige Mineralsäuren, wie Salzsäure oder Schwefelsäure, verwendet werden. Man kann aber auch organische Säuren, wie Ameisensäure und Essigsäure, verwenden. Die Säurekonzentration liegt im Bereich von 1 bis 60 Gew.-%, bezogen auf den Trockensubstanzgehalt, vorzugsweise im Bereich von 10 bis 40 Gew-%. Eine vorhergehende Naßklassierung des Rohmaterials kann sich als vorteilhaft erweisen. Die säurebehandelte Masse wird gegebenenfalls mit angesäuertem Wasser gewaschen, dessen pH-Wert zwischen 1 und 7, vorzugsweise zwischen 2 und 4 liegt, abfiltriert und bei Temperaturen zwischen 50 und 200 °C, vorzugsweise zwischen 80 und 150 °C, getrocknet.

Die erfindungsgemäß verwendeten Katalysatoren zeichnen sich auch durch eine hohe Beständigkeit gegenüber Schwefeloxiden bzw. Schwefelsäure aus, die durch die Säureaktivierung des Schichtsilikats bedingt ist. Es wurde festgestellt, daß unbehandelte, H-ionenausgetauschte oder alkalisch aktivierte Schichtsilikate einem starken Angriff durch Schwefeloxide bzw. Schwefelsäure unterlagen, der zu einer mechanischen Zerstörung und zu einer vorzeitigen Alterung der aus diesen Schichtsilikaten hergestellten Katalysatoren führte.

Andererseits sind Katalysatoren, die unter Verwendung von amorpher Kieselsäure hergestellt wurden, zwar gegenüber Schwefeloxiden und Schwefelsäure beständig, ihre $NO_x$-Aktivität ist jedoch deutlich schlechter.

Vorzugsweise wird ein säureaktiviertes Dreischichtsilikat vom Smektit-Typ, insbesondere vom Montmorillonit-Typ verwendet. Das wichtigste montmorillonithaltige natürliche Mineral ist der Bentonit, der in Form von Calcium- oder Natriumbentonit vorliegen kann. Weitere Mineralien vom Smektittyp sind Hectorit und Nontronit.

Die erfindungsgemäß verwendeten Katalysatoren können als Beschichtungen auf beliebige Trägermaterialien, u. a. auch auf Metallbleche oder -netze, aufgebracht werden. Da es sich bei den erfindungsgemäß verwendeten Katalysatoren jedoch um verhältnismäßig preiswerte Substanzen handelt, werden sie vorzugsweise als Vollmaterialien verwendet. Vorzugsweise liegen die wirksamen Komponenten als Formkörper, insbesonders als Formkörper mit einer hohen geometrischen Oberfläche vor. Ferner sind die Formkörper vorzugsweise so ausgebildet, daß sie den Verbrennungsabgasen einen möglichst geringen Strömungswiderstand bieten. Diese Eigenschaft ist bei Katalysatoren, die in Feuerungsanlagen verwendet werden sollen, besonders wichtig, um das Druckgefälle möglichst niedrig zu halten und um Staubabscheidungen zu verhindern. Entsprechendes gilt für Abgaskatalysatoren für Brennkraftmaschinen, bei denen ein hoher Strömungswiderstand zu einem Leistungsabfall der Brennkraftmaschine führen würde.

Vorzugsweise sind die Formkörper als Tabletten, Ringe, Stäbe, Rohre Sattelkörper, als stern- oder rasterförmige Formkörper oder als Wabenkörper ausgebildet. Die Formkörper können z. B. durch Tablettieren oder Strangpressen erhalten werden, gegebenenfalls unter Zusatz von Stoffen, welche die Verformbarkeit und/oder die mechanische Stabilität erhöhen. Als Zusätze zur Verbesserung der Verformbarkeit können beispielsweise ein- oder mehrwertige Alkohole, Salze vorwiegend längerkettiger Carbonsäuren (z. B. Aluminiumstearat), Graphit und/oder neutrale Bentonite verwendet werden. Unter « neutralen » Bentoniten werden erfindungsgemäß natürliche Alkali- oder Erdalkalibentonite sowie solche Bentonite verstanden, die mit Säure sehr niedriger Konzentration behandelt wurden.

Als Zusätze zur Erhöhung der mechanischen Stabilität können beispielsweise Zemente (z. B. Portland-Zement oder Calciumaluminat-Zement) sowie hydratisierte Kieselsäure (als Kieselgel oder als Sol) verwendet werden. Derartige Zusätze sind allerdings nicht unbedingt zur Herstellung der erfindungsgemäßen Katalysatoren erforderlich.

Die Verformung erfolgt im allgemeinen unter Beimischung von Wasser oder organischen Lösungsmitteln, z. B. von ein- oder mehrwertigen Alkoholen.

Die Kalzinierung der Katalysatorformkörper kann bei Temperaturen von 200 bis 600 °C, vorzugsweise bei 300 bis 500 °C erfolgen. Erheblich höhere Temperaturen haben unter Umständen eine teilweise Zerstörung der Kristallstruktur und somit einen Aktivitätsverlust zur Folge.

Erfindungsgemäß wird bei der reduktiven Verringerung des Stickoxidgehalts von Verbrennungsabgasen als Reduktionsmittel vorzugsweise $NH_3$ eingesetzt. Es können aber auch Wasserstoff oder andere wasserstoffhaltige Reduktionsmittel, wie niedere Alkohole und niedere Kohlenwasserstoffe, eingesetzt werden. In jedem Fall entstehen als Reduktionsprodukte $N_2$ und $H_2O$. Als Stickoxide ($NO_x$) werden die verschiedenen Sauerstoffverbindungen des Stickstoffs bezeichnet, wie z. B. NO, $N_2O_3$, $NO_2$, $N_2O_5$ ; es handelt sich jedoch überwiegend um NO und $NO_2$, wobei NO überwiegt.

Die $NO_x$-Konzentration der zu reinigenden Abgase kann in weiteren Grenzen variieren ; sie liegt im allgemeinen im Bereich von 100 Vol-ppm bis 5 Vol-%. Bei Verwendung von $NH_3$ beträgt das Mol-Verhältnis $NH_3$ : $NO_x$ etwa 0,3 bis 3, vorzugsweise 0,5 bis 1,5, und kann durch regelungstechnische Maßnahmen in der Weise eingestellt werden, daß maximale $NO_x$-Umsätze bei möglichst niedrigem $NH_3$-Schlupf erzielt werden. Dabei kann das Reduktionsmittel ($NH_3$) sowohl gasförmig als auch in Form einer wäßrigen Lösung zudosiert werden.

Die erfindungsgemäß verwendeten Katalysatoren zeichnen sich gegenüber den bekannten Katalysatoren durch eine selektivere Umsetzung des zu $NO_x$-Reduktion verwendeten Ammoniaks aus. Bei bekannten Verfahren (insbesondere bei höheren Betriebstemperaturen) wird ein beträchtlicher Teil des

4

Ammoniaks nicht für die erwünschte $NO_x$-Reduktion genutzt, sondern wird durch den in den Abgasen enthaltenen Sauerstoff selbst oxidiert. Dies führt zu einer erhöhten Bildung von Stickstoff, bzw. sogar von Stickoxiden, d. h. der $NO_x$-Umsatz zwischen dem Eingang und dem Ausgang des Reaktors ist vermindert und der $NH_3$-Verbrauch ist unnötig hoch.

Für die Entstickungsreaktion eignen sich prinzipiell sämtliche üblicherweise für heterogen katalysierte Gasphasenreaktionen verwendeten Reaktoren, sofern die Konstruktionsmerkmale des Reaktors den Durchsatz entsprechend hoher Rauchgasvolumenströme gestatten. Zulässige Raumgeschwindigkeiten (RG) liegen im Bereich von 500 bis 20 000, vorzugsweise zwischen 1 000 und 10 000 Liter Gas je Stunde und Liter Katalysator, wobei diese Raumgeschwindigkeiten sich auf ein Gas bei 0 °C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 250 bis 600 °C, vorzugsweise von 300 bis 500 °C.

Die Wirksamkeit der Katalysatoren hinsichtlich der Beseitigung von Stickoxiden aus Gasgemischen, welche unter anderem auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hatte folgende Zusammensetzung :

$O_2$ 3 Vol-%
$H_2O$ 10 Vol-%
NO 750 Vol-ppm
$NO_2$ 50 Vol-ppm
$NH_3$ 800 Vol-ppm
$SO_2$ 600 Vol-ppm
$N_2$ Differenz bezüglich 100 Vol-%

Die Konzentration der Komponenten NO und $NO_2$ wurde vor und nach Passieren der Katalysatorschüttgutschicht durch einen geeichten Analysator (Chemolumineszenzverfahren) kontinuierlich gemessen. Als Mass für die Aktivität der Katalysatoren dient die Angabe der Umsatzgrade der Komponenten NO und $NO_2$ nach Einstellung des stationären Zustandes, definiert durch die folgenden Beziehungen :

$$NO - Umsatz \ (U_{NO}) = \frac{C_{NO}^E - C_{NO}^A}{C_{NO}^E} \cdot 100 \ [\%]$$

$$NO_2 - Umsatz \ (U_{NO_2}) = \frac{C_{NO_2}^E - C_{NO_2}^A}{C_{NO_2}^E} \cdot 100 \ [\%]$$

Dabei bezeichnen die Symbole $C_{NO}$ und $C_{NO_2}$ die Konzentrationen von NO und $NO_2$, wobei sich die Superskripte E und A auf den Zustand des Gasgemisches vor bzw. nach Passieren des Katalysators beziehen.

Die Herstellung der erfindungsgemäß verwendeten Katalysatoren ist in den Beispielen 1 und 2 erläutert.

Beispiel 1

2 kg einer durch Hydroklassieren in wäßriger Suspension erhaltenen Rohbentonitfraktion mit einer Korngröße ≤ 50 μm, einem Kationenaustauschvermögen von 79 mVal/100 g, einer BET-Oberfläche von 69 m²/g und der Zusammensetzung :

| $SiO_2$ (%) | $Al_2O_3$ (%) | $Fe_2O_3$ (%) | CaO (%) | MgO (%) | $K_2O$ (%) | $Na_2O$ (%) |
|---|---|---|---|---|---|---|
| 61.9 | 17.6 | 5.9 | 6.7 | 5.1 | 1.5 | 0.3 |

werden mit 8 Liter einer wäßrigen HCl-Lösung 6 Stunden bei 80 °C gerührt. Der HCl-Gehalt betrug ca. 21 Gew.-%, bezogen auf die Trockensubstanz. Man saugt ab und wäscht den Filterkuchen reichlich mit angesäuertem Wasser (mittels HCl und pH 3,5 eingestellt). Der erhaltene säureaktivierte Bentonit hat eine BET-Oberfläche von 210 m²/g. Nach Zusatz von 40 ml Glycerin wird in einer Kugelmühle vermahlen und die erhaltene Masse zu zylindrischen Strangpreßlingen vom Durchmesser 3 mm extrudiert. Man trocknet bei 120 °C und kalziniert 2 Stunden bei 200 °C, 1 Stunde bei 300 °C sowie 3 Stunden bei 450 °C.

Die Katalysatormasse hat die folgende Zusammensetzung :

| $SiO_2$ | $Al_2O_3$ | $Fe_2O_3$ | CaO | MgO | $K_2O$ | $Na_2O$ |
|---|---|---|---|---|---|---|
| (%) | (%) | (%) | (%) | (%) | (%) | (%) |
| 74.8 | 17.1 | 4.6 | 0.2 | 2.1 | 0.9 | 0.3 |

Aus der Zusammensetzung vor und nach der Säureaktivierung errechnet sich eine Erniedrigung der Konzentration der Zwischenschicht-Kationen um 75 %.

Die auf eine Länge von ca. 5 mm zerkleinerten Strangpreßlinge werden einem Wirksamkeitstest unter den beschriebenen Bedingungen unterzogen :

| RG | T | $U_{NO}$ | $U_{NO_2}$ |
|---|---|---|---|
| $(h^{-1})$ | (°C) | (%) | (%) |
| 5 000 | 300 | 46 | 90 |
| 5 000 | 350 | 64 | 100 |
| 5 000 | 400 | 73 | 100 |
| 5 000 | 450 | 72 | 100 |

$N_2O$ in nachweisbarer Konzentration wurde nicht gebildet.

## Beispiel 2

Die Arbeitsweise von Beispiel 1 wurde mit der Abweichung wiederholt, daß der HCl-Gehalt statt 21 Gew.-% jetzt 34 Gew.-%, bezogen auf die Trockensubstanz, betrug. Die Katalysatormasse hat die folgende Zusammensetzung :

| $SiO_2$ | $Al_2O_3$ | $Fe_2O_3$ | CaO | MgO | $K_2O$ | $Na_2O$ |
|---|---|---|---|---|---|---|
| (%) | (%) | (%) | (%) | (%) | (%) | (%) |
| 76.5 | 15.8 | 4.3 | 0.2 | 1.9 | 0.9 | 0.3 |

Die BET-Oberfläche des säureaktivierten Bentonits betrug 221 m²/g.

Die auf eine Länge von ca. 5 mm zerkleinerten Strangpreßlinge werden einem Wirksamkeitstest unter den beschriebenen Bedingungen unterzogen :

| RG | T | $U_{NO}$ | $U_{NO_2}$ |
|---|---|---|---|
| $(h^{-1})$ | (°C) | (%) | (%) |
| 5 000 | 350 | 63 | 100 |
| 5 000 | 400 | 72 | 100 |
| 5 000 | 450 | 71 | 100 |

Vergleichsbeispiel

Die nicht säureaktivierte Rohbentonitfraktion von Beispiel 1 wurde wie in Beispiel 1 angegeben, mit Glycerin in einer Kugelmühle vermahlen, worauf die erhaltene Masse zu zylindrischen Strangpresslingen vom Durchmesser 3 mm extrudiert wurden. Die Strangpresslinge wurden bei 120 °C getrocknet, 2 Stunden bei 200 °C, 1 Stunde bei 300 °C sowie 3 Stunden bei 450 °C kalziniert.

Die Katalysatormasse hat die in Beispiel 1 angegebene Zusammensetzung

Die auf eine Länge von ca. 5 mm zerkleinerten Strangpreßlinge werden einem Wirksamkeitstest unter den beschriebenen Bedingungen unterzogen :

| RG | T | $U_{NO}$ | $U_{NO_2}$ |
|---|---|---|---|
| $(h^{-1})$ | (°C) | (%) | (%) |
| 5 000 | 350 | 22 | < 80 |
| 5 000 | 400 | 23 | < 80 |
| 5 000 | 450 | 21 | < 80 |

## Patentansprüche

1. Verwendung eines Katalysators, der als wirksame Komponente ein säureaktiviertes Silikat mit Schichtstruktur enthält, dessen Schichtstruktur im wesentlichen noch erhalten ist, als Katalysator zur Verminderung des Stickoxidgehalts von Abgasen, insbesondere von Verbrennungsabgasen.

2. Verwendung nach Anspruch 1, dadurch gekennzeichnet, daß die wirksame Komponente ein säureaktiviertes Silikat mit Dreischichtstruktur (Dreischichtsilikat) mit folgenden Merkmalen ist :

a) das Dreischichtsilikat hat vor der Säureaktivierung ein Kationenaustauschvermögen von ≥ 30 mVal/100 g ;

b) aufgrund der Säureaktivierung ist die Konzentration der Zwischenschicht-Kationen erniedrigt, und die BET-Oberfläche ist um mindestens 15 %, vorzugsweise um mindestens 50 %, bezogen auf die BET-Oberfläche des Dreischichtsilikats vor der Säureaktivierung, erhöht.

3. Verwendung nach einem der Ansprüche 1 und 2, dadurch gekennzeichnet, daß die wirksame Komponente ein säureaktiviertes Dreischichtsilikat vom Smektit-Typ, insbesondere vom Montmorillonit-Typ darstellt.

4. Verwendung nach einem der Ansprüche 1 bis 3, dadurch gekennzeichnet, daß die Konzentration der Zwischenschicht-Kationen aufgrund der Säureaktivierung gegenüber der Konzentration der Zwischenschicht-Kationen im Dreischichtsilikat vor der Säureaktivierung um mindestens 12 % erniedrigt ist.

5. Verwendung nach einem der Ansprüche 1 bis 4, dadurch gekennzeichnet, daß der $SiO_2$-Gehalt des säureaktivierten Dreischichtsilikats gegenüber dem des Ausgangsmaterials um mindestens 5 %, vorzugsweise um mindestens 10 % erhöht ist.

6. Verwendung nach einem der Ansprüche 1 bis 5, dadurch gekennzeichnet, daß die wirksame Komponente als Formkörper, insbesondere als Formkörper mit einer hohen geometrischen Oberfläche und einem geringen Strömungswiderstand gegenüber den Verbrennungsabgasen vorliegt.

7. Verwendung nach Anspruch 6, dadurch gekennzeichnet, daß die Formkörper als Tabletten, Ringe, Sattelkörper, Stäbe, Rohre als stern- oder rasterförmige Formkörper oder als Wabenkörper vorliegen.

8. Verwendung nach einem der Ansprüche 1 bis 7, dadurch gekennzeichnet, daß die Formkörper durch Tablettieren oder Strangpressen, gegebenenfalls unter Zusatz von Stoffen, welche die Verformbarkeit und/oder die mechanische Stabilität erhöhen, erhalten worden sind.

9. Verwendung nach Anspruch 8, dadurch gekennzeichnet, daß die Formkörper unter Verwendung von ein- oder mehrwertigen Alkoholen, Salzen vorwiegend längerkettiger Carbonsäuren, Graphit und/oder neutraler Bentonite als Zusätze zur Verbesserung der Verformbarkeit erhalten worden sind.

10. Verwendung nach Anspruch 7, dadurch gekennzeichnet, daß die Formkörper unter Verwendung von Zement und/oder hydratisierter Kieselsäure als Zusätze zur Erhöhung der mechanischen Stabilität erhalten worden sind.

11. Verwendung nach einem der Ansprüche 1 bis 10, dadurch gekennzeichnet, daß die aktiven Komponenten und gegebenenfalls die Zusatzstoffe einer Kalzinierung bei Temperaturen von 200 bis 650 °C, vorzugsweise von 300 bis 500 °C, unterzogen worden sind.

12. Verwendung nach einem der Ansprüche 1 bis 11, wobei die Verringerung des Stickoxidgehalts von Verbrennungsabgasen unter reduzierenden Bedingungen im Temperaturbereich von 250 bis 600 °C, vorzugsweise von 300 bis 500 °C, und bei einer Raumgeschwindigkeit im Bereich von 500 bis 20 000, vorzugsweise von 1 000 bis 10 000 Liter Gas je Stunde und Liter Katalysator vorgenommen wird.

13. Verwendung nach Anspruch 12, dadurch gekennzeichnet, daß als Reduktionsmittel $NH_3$ eingesetzt wird.

14. Verwendung nach Anspruch 13, dadurch gekennzeichnet, daß das Mol-Verhältnis $NH_3 : NO_x$ etwa 0,3 bis 3, vorzugsweise 0,5 bis 1,5, beträgt.

## Claims

1. Use of a catalyst, which contains as active component an acid-activated silicate with a layer structure whose layer structure is substantially retained, as a catalyst for decreasing the nitrogen oxide content of waste gases, in particular waste gases of combustion.

2. Use of a catalyst according to Claim 1, characterised in the active component is an acid-activated silicate with a three-layer structure (three-layer silicate) having the following features :

a) before acid activation, the three-layer silicate has a cation-exchange capacity of ≥ 30 mVal/100 g,

b) as a result of acid activation, the concentration of the interlayer cations is decreased and the B.E.T. surface area is increased by at least 15 %, preferably by at least 50 %, in relation to the B.E.T. surface area of the three-layer silicate before acid activation.

3. Use according to Claim 1 and 2, characterised in that the active component represents an acid-activated three-layer silicate of smectite type, in particular of montmorillonite type.

4. Use according to any one of Claims 1 to 3, characterised in that, as a result of the acid activation, the concentration of the interlayer cations is decreased by at least 12 % relative to the concentration of the interlayer cations in the three-layer silicate before acid activation.

5. Use according to any one of Claims 1 to 4, characterised in that the $SiO_2$ content of the acid-activated three-layer silicate is at least 5 %, preferably at least 10 %, higher than that of the starting material.

6. Use according to any one of Claims 1 to 5, characterised in that the active component is provided in the form of shaped bodies, in particular shaped bodies with a large geometrical surface area and with low resistance to the flow of the waste gases of combustion.

7. Use according to Claim 6, characterised in that the shaped bodies are provided in the form of pellets, rings, saddles, rods, tubes, in the form of star-like or grid-like shaped bodies or of honeycombs.

8. Use according to any one of Claims 1 to 7, characterised in that the shaped bodies have been produced by pelletising or extrusion, optionally with the addition of substances which increase deformability and/or mechanical stability.

9. Use according to Claim 8, characterised in that the shaped bodies have been produced using monovalent or polyvalent alcohols, salts of predominantly long-chain carboxylic acids, graphite and/or neutral bentonite as additives for improving deformability.

10. Use according to Claim 7, characterised in that the shaped bodies have been produced using cement and/or hydrated silicic acids as additives for increasing mechanical stability.

11. Use according to any one of Claims 1 to 10, characterised in that the active components and, optionally, the additives have been subjected to calcination at temperatures of from 200 to 650 °C, preferably from 300 to 500 °C.

12. Use according to any one of Claims 1 to 11, wherein the decrease in the nitrogen oxide content of waste gases of combustion is carried out under reducing conditions in the temperature range of from 250 to 600 °C, preferably from 300 to 500 °C, and at a spatial velocity in the range of from 500 to 20,000, preferably from 1,000 to 10,000, litres of gas per hour and litre of catalyst.

13. Use according to Claim 12, characterised in that $NH_3$ is used as the reducing agent.

14. Use according to Claim 13, characterised in that the molar ratio $NH_3 : NO_x$ is approximately 0.3 to 3, preferably 0.5 to 1.5.


## Revendications

1. Utilisation d'un catalyseur qui contient, comme constituant actif, un silicate à structure feuilletée activé par un acide, dont la structure feuilletée est pour l'essentiel encore conservée, comme catalyseur pour diminuer le taux d'oxydes d'azote de gaz usés, en particulier de gaz usés de combustion.

2. Utilisation selon la revendication 1, caractérisée en ce que le constituant actif est un silicate activé par un acide à structure à trois feuillets (silicate à trois feuillets) avec les caractéristiques suivantes :

a) le silicate à trois feuillets a, avant l'activation à l'acide, un pouvoir d'échange de cations $\geqslant$ 30 mVal/100 g ;

b) du fait de l'activation à l'acide, la concentration des cations inter-feuillets est abaissée et la surface BET est augmentée d'au moins 15 %, de préférence d'au moins 50 %, par rapport à la surface BET du silicate à trois feuillets avant l'activation à l'acide.

3. Utilisation selon l'une des revendications 1 et 2, caractérisée en ce que le constituant actif est un silicate à trois feuillets activé par un acide, de type smectite, en particulier de type montmorillonite.

4. Utilisation selon l'une des revendications 1 à 3, caractérisée en ce que la concentration en cations inter-feuillets est abaissée d'au moins 12 % par rapport à la concentration en cations inter-feuillets dans le silicate feuilleté avant l'activation par un acide, du fait de l'activation par un acide.

5. Utilisation selon l'une des revendications 1 à 4, caractérisée en ce que la teneur en $SiO_2$ du silicate à trois feuillets activé par un acide est augmentée d'au moins 5 %, de préférence d'au moins 10 % par rapport à celle du produit de départ.

6. Utilisation selon l'une des revendications 1 à 5, caractérisée en ce que le constituant actif est sous forme de pièces moulées, en particulier de pièces moulées avec une surface géométrique élevée et une faible résistance à l'écoulement vis-à-vis des gaz usés de combustion.

7. Utilisation selon la revendication 6, caractérisée en ce que les pièces moulées sont sous forme de comprimés, d'anneaux, de pièces en forme de selle, de bâtonnets, de tubes, de pièces moulées en forme d'étoile ou de réseau ou sous forme de pièces en nid d'abeilles.

8. Utilisation selon l'une des revendications 1 à 7, caractérisée en ce que les pièces moulées ont été obtenues par pastillage ou par extrusion, éventuellement avec addition de substances qui augmentent l'aptitude au formage et/ou la stabilité mécanique.

9. Utilisation selon la revendication 8, caractérisée en ce que les pièces moulées ont été obtenues par utilisation d'alcools mono- ou plurivalents, de sels d'acides carboxyliques principalement à chaîne longue, de graphite et/ou de bentonite neutre en tant qu'additifs pour améliorer l'aptitude au formage.

10 Utilisation selon la revendication 7, caractérisée en ce que les pièces moulées ont été obtenues par utilisation de ciment et/ou d'acide silicique hydrate comme additifs pour augmenter la stabilité mécanique.

11. Utilisation selon l'une des revendications 1 à 10, caractérisée en ce que les constituants actifs et éventuellement les additifs ont été soumis à une calcination à des températures de 200 à 650 °C, de préférence de 300 à 500 °C.

12. Utilisation selon l'une des revendications 1 à 11, dans laquelle la réduction de la teneur en oxydes d'azote des gaz usés de combustion est réalisée dans des conditions réductrices dans une gamme de températures de 250 à 600 °C, de préférence de 300 à 500 °C, et avec une vitesse spatiale dans la gamme de 500 à 20 000, de préférence de 1 000 à 10 000 litres de gaz par heure et par litre de catalyseur.

13. Utilisation selon la revendication 12, caractérisée en ce que l'on utilise $NH_3$ comme réducteur.

14. Utilisation selon la revendication 13, caractérisée en ce que le rapport molaire $NH_3 : NO_x$ vaut environ 0,3 à 3, de préférence 0,5 à 1,5.